# FASCICULE DE BREVET EUROPEEN

(11) **EP 1 042 247 B1**
(45) Date de publication et mention de la délivrance du brevet: **17.02.2010**
(21) Numéro de dépôt: 99949079.0
(22) Date de dépôt: 20.10.1999
(51) Int. Cl.: C03C 17/36, C03C 17/34

(54) **EMPILEMENT DE COUCHES POUR SUBSTRATS TRANSPARENTS**
MEHRSCHICHTBEKLEIDUNG FÜR TRANSPARENTE SUBSTRATE
LAYERED FILMS FOR TRANSPARENT SUBSTRATES

(30) Priorité: 22.10.1998 DE 19848751
(43) Date de publication de la demande: 11.10.2000
(73) Titulaire: SAINT-GOBAIN VITRAGE, 92400 Courbevoie (FR)
(72) Inventeur: SCHICHT, Heinz, D-06925 Bethau (DE); SCHMIDT, Uwe, D-04895 Falkenberg (DE); KAISER, Wilfried, D-04860 Torgau (DE); SCHINDLER, Herbert, D-04860 Torgau (DE); PFANNKUCHEN, Rolf, D-09599 Freiberg (DE)
(74) Mandataire: Le Cam, Stéphane Georges Elie
(86) Numéro de dépôt international: PCT/FR1999/002548
(87) Numéro de publication internationale: WO 2000/024686

(56) Documents cités:
- EP-A- 0 343 695
- EP-A- 0 675 550
- EP-A- 0 751 099
- EP-A- 0 922 681
- EP-A- 1 047 644
- GB-A- 2 256 282

## Description

L'invention se rapporte à un empilement de couches pour substrats transparents, en particulier pour substrats en verre, avec au moins une couche composite d'oxydes métalliques, et notamment produite par pulvérisation cathodique réactive à partir d'une cible d'alliage métallique contenant Zn et Sn. Les substrats porteurs de l'empilement peuvent aussi être à base de matériau transparent en polymère organique, et être rigides ou souples. Des substrats en polymère rigide sont par exemple des substrats en polycarbonates ou en certains polyuréthanes. Il peut s'agir de polyméthacrylate de méthyle (PMMA). Des substrats souples sont par exemple du type polyéthylène tétéphtalate (PET), film que l'on vient ensuite feuilleter à l'aide de deux feuilles en polymère thermoplastique (du type polyvinyl butyral PVB) à deux verres.

Les demandes de brevet EP 0183 052 et EP 0226 993 divulguent des empilements de couches à transparence élevée/à émissivité faible, dans lesquels une couche métallique fonctionnelle, en particulier une couche mince d'argent, est disposée entre deux couches anti-réflexion en matériau diélectrique qui sont le produit d'oxydation d'un alliage zinc/étain. Ces couches en diélectrique d'oxydes sont déposées par pulvérisation cathodique réactive assistée par champ magnétique, à l'aide d'un gaz réactif contenant de l'oxygène, à partir d'une cible métallique qui se compose d'un alliage Zn/Sn. En fonction du rapport Zn:Sn, la couche composite d'oxyde produite de cette manière contiendra une quantité plus ou moins importante de stannate de zinc Zn₂SnO₄, ce qui donne à la couche des propriétés particulièrement favorables, tout spécialement en termes de stabilité mécanique et chimique. Des alliages Zn:Sn avec un rapport Zn:Sn de 46:54 à 50:50% en poids sont utilisés de préférence en tant que cible.

EP 1 047 644 B divulgue un verre flotté d'une épaisseur de 6 mm est muni du système de couches suivant :
Verre - 25 nm de SnO₂ - 8 nm de ZnO - 4 nm de Zn - 13,5 nm d'Ag - 3 nm de AlZnMg - 40 nm de SnO₂ - 4 nm de ZnₓSn_{y}Al_{z}Oₙ :
   * la cible qui est pulvérisée pour faire la couche sacrificielle en AlZnMg étant à base d'un alliage comprenant 94% en poids d'Al, 6% en poids de Zn et 1% en poids de Mg ; la couche obtenue a une composition très proche de celle de la cible, et
   * pour faire la couche mixte d'oxyde de zinc, on utilise une cible comprenant 68% de Zn, 30% de Sn et 2% d'Al en poids.

Dans le procédé de pulvérisation cathodique avec des empilements de revêtement industriels, la pulvérisation cathodique des couches Zn₂SnO₄ à partir de cibles en alliage Zn/Sn est plus difficile que la pulvérisation cathodique de couches de ZnO ou de SnO₂ pures. Ceci est dû au fait que, en particulier au début du processus de pulvérisation cathodique, le matériau sur la cible et sur les pièces de la chambre de pulvérisation cathodique conduit à des effets d'isolation, dont les conséquences sont des produits défectueux et par conséquent des produits à rejeter. De plus, les cibles en alliage de ce type doivent être utilisées à des vitesses réduites de pulvérisation cathodique, c'est-à-dire à une puissance électrique réduite, parce que l'alliage de la cible a un point de fusion inférieur aux températures de fusion des deux composants, tout spécialement dans la région de la composition eutectique. Le refroidissement de cibles de ce genre doit, par conséquent, être particulièrement intensif. Ceci, à son tour, ne peut être réalisé qu'avec des cibles d'une conception particulière, dont la production est comparativement coûteuse.

L'objet de l'invention est, d'une part, d'améliorer encore les propriétés mécaniques et chimiques des couches en diélectrique contenant le stannate de zinc, et, d'autre part, d'atténuer les difficultés qui se produisent lors du dépôt par pulvérisation cathodique de couches en oxyde d'alliage Zn/Sn.

Conformément à l'invention, cet objet est réalisé par l'empilement selon la revendication 1. Dans cet empilement, la couche composite d'oxydes métalliques contient un ou plusieurs des éléments Al, Ga, In, B, Y, La, Ge, Si, P, As, Sb, Bi, Ce, Ti, Zr, Nb et Ta.

Il a été démontré que, par l'addition selon l'invention desdits éléments, qui, sans exception, sont parmi les éléments dans les groupes principaux et subsidiaires III, IV et V du tableau Périodique, on obtient une amélioration considérable des propriétés de couche qui importent (c'est-à-dire notamment la durabilité chimique et mécanique, la qualité optique), combinée à une amélioration de l'efficacité du procédé de pulvérisation cathodique.

Les oxydes mixtes créés par les éléments ajoutés selon l'invention, par exemple par l'addition de Al et de Sb, ont notamment la composition qualitative ZnO·ZnSnO₃·Zn₂SnO₄·ZnAl₂O₄·ZnSb₂O₆, en fonction du choix des quantités des métaux Zn et Sn. Au moment de la cristallisation, certains de ces oxydes forment des structures de spinelle, qui, en soi, cristallisent dans un ordonnancement atomique particulièrement dense. Les améliorations apportées aux propriétés de couches peuvent probablement s'expliquer par la densité de tassement particulièrement élevée obtenue pour les structures de spinelle obtenues par l'incorporation desdits éléments ajoutés, alors que l'effet favorable pendant le dépôt par pulvérisation cathodique peut probablement être attribué à l'augmentation de la conductibilité électrique des oxydes mixtes qui est obtenue par l'incorporation des éléments ajoutés.

En raison de cette structure cristalline dense, les couches non seulement possèdent une stabilité mécanique et chimique particulièrement élevée, mais empêchent aussi les processus de diffusion dans cette couche ou à travers cette couche. Ceci réduit le risque de l'amorce de modifications de la couche elle-même ou des autres couches de l'empilement, modifications que l'on attribue par exemple à la diffusion de molécules d'eau et d'oxygène et de Na⁻ et, là où cela est applicable quand l'empilement contient des couches minces en Ag), de Ag⁺, tout spécialement pendant les traitements thermiques et le stockage.

Pour une structure de spinelle à densité maximale, il est particulièrement favorable d'avoir un rayon ionique de l'élément ajouté ne différant pas trop du rayon ionique de Zn²⁺ et Sn⁴⁺, qui ont des rayons ioniques de 0.83 angström (Zn²⁺) et de 0.74 angström (Sn⁴⁺), respectivement. Cette condition est satisfaite, en particulier, pour les éléments Al et Sb, avec les rayons ioniques de Al³⁺ = 0,57 Å, et de Sb⁵⁺ = 0,62 Å. D'autre part, comme déjà mentionné, l'incorporation desdits éléments ajoutés dans la couche au moins partiellement cristallisée augmente la conductibilité électrique des dépôts d'oxydes à la surface des anodes et sur les parois des chambres de dépôt, tout comme sur la surface de la cible elle-même. Par conséquent, les durées de fonctionnement de la cible pendant le processus de pulvérisation cathodique sont, à leur tour, allongées de manière considérable, de sorte que l'on peut observer non seulement une amélioration des propriétés de la couche, mais aussi une amélioration du processus de pulvérisation cathodique.

La quantité d'éléments ajoutés selon l'invention dans la couche composite d'oxydes métalliques est de 0,5 à 6,5% en poids, par rapport à la quantité totale de métal.

Les compositions de la couche composite d'oxydes métalliques qui se sont avérées être particulièrement avantageuses sont celles dans lesquelles, dans chaque cas par rapport à la quantité totale de métal, la quantité de Zn va de 35 à 70 % en poids et la quantité de Sn va de 29 à 64,5 % en poids. Pour la production de cette couche composite d'oxydes métalliques, on emploie de préférence des cibles en alliage ayant de 50à 70%, notamment 66 à 69% en poids de Zn, de 29 à 50%, notamment 29 à 32% en poids de Sn, et de 1 à 4% en poids de Al ou de Sb (notamment 1.5 à 3%).

Les couches composites de métaux selon l'invention peuvent être utilisées en particulier avec succès dans des empilements de couches partiellement réfléchissantes avec une couche fonctionnelle métallique en argent. Dans des empilements de couches de ce genre, elles peuvent être utilisées tout à la fois en tant que couche d'adhésion ou couche anti-réflexion, en tant que couche de mouillage/de nucléation pour des couches d'argent déposées par-dessus, en tant que couche bloqueuse en dessous ou au-dessus des couches d'argent et en tant que sous-couche dans la région de la couche supérieure et/ou inférieure de l'empilement de couches.

Des modes de réalisation donnés à titre indicatif, relatifs à des empilements de couches selon l'invention, seront décrits ci dessous, les propriétés obtenues respectivement étant comparées aux propriétés d'un empilement de couches correspondant selon l'art antérieur.

De façon à évaluer les propriétés des couches, on a effectué dix tests différents sur tous les échantillons, à savoir :

### A. Dureté de fissuration

Dans ce cas, on tire une aiguille chargée d'un poids sur la couche à une vitesse déterminée. Le poids sous lequel des traces de fissuration deviennent visibles est utilisé comme une mesure de la dureté de fissuration.

### B. Dureté de fissuration après stockage dans l'eau

Même procédure de test que pour A, mais après stockage des échantillons dans l'eau à 20°C pendant 30 minutes.

### C. Test de lavage Erichsen conformément à la norme ASTM 2486

Evaluation visuelle

### D. Test de condensation d'eau (WCT)

Les échantillons sont exposés pendant une durée de 140 heures à une température de 60°C sous une humidité relative de 100%. Evaluation visuelle.

### E. Lessivage de Zn²⁺

La mesure est effectuée par utilisation de la méthode de la plaque conformément à Kimmel et al., Z. Glastechnische Berichte 59 (1986) p. 252 et suivantes. Le test fournit des informations relatives à la résistance hydrolytique des empilements de couches contenant Zn.

### F. Lessivage de Ag⁺

La mesure est effectuée à nouveau par utilisation de la méthode de la plaque conformément à Kimmel et al., utilisée pour la détermination du lessivage de Zn²⁻. Le résultat de la mesure fournit une jauge analytique de la densité des couches diélectriques sur la couche de Ag.

### G. Test à l'acide chlorhydrique

Dans ce cas, l'échantillon de verre est plongé pendant 8 minutes dans une solution de 0,01 n HCl à 38°C et le pourcentage de perte d'émissivité est établi.

### H. Test à l'acide chlorhydrique, évaluation visuelle

L'échantillon en verre est plongé comme pour G dans de l'acide chlorhydrique. Le critère d'évaluation utilisé est ce que l'on peut voir sur le bord qui est immergé.

### I. Test EMK

Ce test est décrit dans Z. Silikattechnik 32 (1981) p. 216 "Untersuchungen zur elektrochemischen Prüfung dünner Metallschichten" [Etudes sur la mise à l'essai électrochimique de couches métalliques minces]. Il fournit des informations sur la qualité de passivation de la couche de couverture au-dessus de la couche d'argent, et sur la résistance à la corrosion de la couche de Ag. La qualité de la couche est d'autant meilleure que la différence de potentiel (en mV) entre le empilement de couches et l'électrode de référence est plus faible.

### K. Test du film d'eau

Le côté couche des échantillons est mis en contact pendant 24 heures avec un mince film d'eau. Le test fournit des informations sur la stabilité de stockage de vitres en verre revêtues empilées dans un empilement si des traces d'eau pénètrent entre les vitres en verre. L'évaluation est réalisée visuellement.

### EXEMPLE COMPARATIF 1

Dans un empilement à magnétron continu industriel, un empilement de couches selon l'art antérieur, avec la séquence de couches suivante, a été déposé dans des conditions de revêtement habituelles sur des verres flottés de 6 mm d'épaisseur :
verre - 40 nm SnO₂ - 2 nm CrNi - 10 nm Ag - 4 nm CrNi - 37 nm SnO₂ - 3 nm Zn₂SnO₄.

Les couches de CrNi ont été déposées par pulvérisation cathodique à partir d'une cible faite d'un alliage de CrNi, avec 20% en poids de Cr et 80% en poids de Ni dans une atmosphère de Ar, alors que la couche de Zn₂SnO₄ a été déposée par pulvérisation cathodique réactive dans une atmosphère Ar/O₂ à partir d'une cible faite d'un alliage de Zn/Sn, avec 52,4% en poids de Zn et 47,6% en poids de Sn.

Pendant le dépôt de la couche de Zn₂SnO₄, des arcs électriques non désirés se sont produits au début du processus de pulvérisation cathodique, et ceux-ci ont conduit à des défauts de revêtement. De plus, les empreintes des ventouses utilisées dans les dispositifs pour l'empilement des vitres en verre étaient visibles sur les verres revêtus.

Les tests auxquels il a été fait référence sous A à K ont été effectués sur les échantillons correspondants des verres revêtus. Les résultats des tests sont répertoriés dans le tableau 1, conjointement aux résultats des tests effectués dans le mode de réalisation correspondant 1 donné à titre indicatif.

### Mode de réalisation 1

Dans le même empilement de revêtement, et dans les mêmes conditions de revêtement, un empilement de couches selon l'invention, avec la séquence de couches suivante, a été déposé sur des verres flottés de 6 mm d'épaisseur :
verre - 40 nm SnO₂ - 2 nm CrNi - 10 nm Ag - 4 nm CrNi - 37 nm SnO₂ - 3 nm ZnₓSn_{y}Al_{z}Oₙ.

La seule différence par rapport à l'exemple comparatif 1 résidait dans le fait que la couche de couverture supérieure de l'empilement de couches avait été appliquée par pulvérisation cathodique réactive à partir d'une cible qui se composait d'un alliage ayant 68% en poids de Zn, 30% en poids de Sn et 2% en poids de Al. Pendant la pulvérisation cathodique de cette couche de couverture supérieure, on n'a observé aucun arc électrique non désiré. De plus, on a découvert de manière inattendue qu'aucune empreinte de ventouses non désirés n'était visible avec cet empilement de couches.

Les résultats des tests obtenus avec cet empilement de couches sont indiqués dans le tableau 1 ci dessous :

**TABLEAU 1**

| Test | Exemple comparatif 1 | Mode de réalisation 1 |
|---|---|---|
| A (g) | 33 | 35 |
| B (g) | 35 | 55 |
| C (1000 passes aller-retour) | 1 fissure moyenne, plusieurs petites fissures | 1 petite fissure |
| D | rougissement prononcé | rougissement très léger |
| E (mg/25 ml) | 0,19 | 0,19 |
| F (mg/25 ml) | 0,47 | 0,03 |
| G (ΔE en %) | 1 | 0 |
| H | traînées rouges | pas de défauts |
| I (m V) | 95.5 | 86 |
| K | pas de défauts | pas de défauts |

On peut constater, à partir du tableau 1, que l'empilement de couches selon l'invention fournit de meilleurs résultats dans presque tous les tests que l'empilement de couches selon l'exemple comparatif.

### EXEMPLE COMPARATIF 2

Dans le même empilement de revêtement, dans des conditions comparables, l' empilement de couches suivant selon l'art antérieur a, de nouveau, été appliqué à des verres flottés de 6 mm d'épaisseur :
vitre en verre - 40 nm SnO₂ - 2 nm CrNi - 10 nm Ag - 4 nm CrNi - 34 nm SnO₂ - 4 nm Zn₂SnO₄ - 4,5 nm TiO₂.

La couche de Zn₂SnO₄ a, de nouveau, .été déposée par pulvérisation cathodique réactive à partir d'une cible en alliage métallique qui se composait de 52,4% en poids de Zn et de 47,6% en poids de Sn. Pendant la pulvérisation cathodique de la couche de Zn₂SnO₄, on a observé à nouveau des arcs non désirés, et ceux-ci ont conduit à des défauts de revêtement. La couche de TiO₂ a été appliquée par pulvérisation cathodique réactive à partir d'une cible en titane métallique avec une cathode DMS et un gaz de travail composé d'un mélange Ar/O₂/N_{.}

Les tests auxquels on a fait référence sous A à K ont à nouveau été effectués sur des échantillons de verres revêtus. Les résultats sont répertoriés dans le tableau 2, conjointement aux résultats des tests déterminés avec les échantillons produits conformément au mode de réalisation donné à titre indicatif 2.

### Mode de réalisation 2

Dans les mêmes conditions de revêtement, avec le même empilement de revêtement, un empilement de couches selon l'invention avec la séquence de couches suivante a été déposé avec le même empilement de revêtement sur des verres flottés de 6 mm d'épaisseur :
verre - 40 nm SnO₂ - 2 nm CrNi - 10 nm Ag - 4 nm CrNi - 34 nm SnO₂ - 4 nm ZnₓSn_{y}Sb_{z}Oₙ - 4,5 nm TiO₂.

La seule différence par rapport à l'exemple comparatif résidait dans le fait que, pour produire la sous-couche contenant l'oxyde mixte Zn/Sn, la cible utilisée était faite d'un alliage se composant de 68% en poids de Zn, de 30% en poids de Sn et de 2% en poids de Sb. On n'a observé aucun arc non désiré pendant la pulvérisation cathodique de cet alliage.

Les échantillons de vitres en verre revêtues ont été soumis aux tests auxquels il est fait référence sous A à K. Les résultats sont répertoriés dans le tableau 2 ci dessous, conjointement aux résultats obtenus avec les échantillons de l'exemple comparatif 2.

**TABLEAU 2**

| Test | Exemple comparatif 2 | Mode de réalisation 2 |
|---|---|---|
| A (g) | 30 | 45-50 |
| B (g) | 35 | 55 |
| C (1000 passes aller-retour) | 1 fissure moyenne | 1 petite fissure |
| D 140 heures | rougissement faible | toujours aucun défaut après 400 heures |
| E (mg/25 ml) | 0,19 | 0,15 |
| F (mg/25 ml) | 0,35 | 0,01 |
| G (ΔE en %) | 1 | 0 |
| H | traînées rouges | aucun défaut |
| I (mV) | 80 | 30 |
| K | aucun défaut | aucun défaut |

Les résultats des tests montrent que la couche de couverture de TiO₂ possède une meilleure compatibilité avec la couche de composition selon l'invention qu'avec la couche de stannate de zinc de l'exemple comparatif. Ceci se manifeste par une amélioration supplémentaire des résultats des tests, en particulier dans les résultats substantiellement meilleurs dans le test D (test de condensation d'eau) et dans une amélioration significative du résultat du test EMF. Le résultat du lessivage de Ag* est également substantiellement meilleur, et cet empilement de couches possède, par conséquent, une qualité remarquable dans son ensemble.

### EXEMPLE COMPARATIF 3

Dans le même empilement de revêtement, l'empilement de couches suivant a, une fois de plus, été déposé, dans des conditions de revêtement comparables, sur des verres flottés de 6 mm d'épaisseur en tant qu'échantillons comparatifs:
verre - 20 nm SnO₂ - 17 nm ZnO - 11 nm Ag - 4 nm TiO₂ - 40 nm SnO₂.

Cet empilement de couches est un empilement de couches qui a fait ses preuves conformément à l'art antérieur.

Les tests auxquels on a fait référence sous A à K ont également été effectués sur des échantillons de vitres en verre revêtues avec cet empilement de couches. Les résultats des tests ont été, une fois de plus, répertoriés dans le tableau 3, conjointement aux résultats des tests déterminés à l'aide des échantillons produits conformément au mode de réalisation 3 donné à titre indicatif.

### Mode de réalisation 3

Dans des conditions de revêtement comparables à celles de l'exemple comparatif 3, un empilement de couches selon l'invention, avec la séquence de couches suivante, a été déposé à l'aide du même empilement de revêtement sur des verres flottés de 6 mm d'épaisseur :
verre - 20 nm SnO₂ - 17 nm ZnO - 1 1 nm Ag - 1 nm Ti - 3 nm ZnₓSn_{y}Al_{z}Oₙ - 40 nm SnO₂.

Dans ce cas, la couche composite d'oxydes métalliques selon l'invention sert de couche bloqueuse conjointement à la couche très mince de Ti disposée directement sur la couche d'argent.

Les résultats des tests effectués sur les échantillons correspondants sont indiqués également dans le tableau 3.

**TABLEAU 3**

| Test | Exemple comparatif 3 | Mode de réalisation donné à titre indicatif 3 |
|---|---|---|
| A (g) | 4,5 | 7,5 |
| B (g) | 4,5 | 8 |
| C (350 passes aller-retour) | 2 petites rayures | aucune rayure |
| D 70 heures | taches rouges | aucun défaut |
| E (mg/25 ml) | 0,80 | 0,30 |
| F (mg/25 ml) | 0,60 | 0,20 |
| G (ΔE en %) | 8 | 1 |
| H | traînées rouges | aucun défaut |
| I (mV) | 210 | 130 |
| K | aucun défaut | aucun défaut |

La comparaison des résultats des tests montre que des améliorations considérables sont également observées tout à la fois dans les propriétés chimiques et mécaniques dans le cas où la couche selon l'invention est utilisée en tant que couche bloqueuse.

En conclusion, les couches d'oxyde mixte selon l'invention permettent à la fois de faciliter le dépôt des couches et d'augmenter la durabilité chimique et mécanique des empilements qui l'incorporent, tout particulièrement quand elles constituent la dernière ou l'avant-dernière couche de l'empilement. Ce type de couche permet ainsi de rendre plus résistants des empilements de couches utilisant des couches en diélectrique en oxyde, les rapprochant ainsi de la durabilité des empilements ayant recours à des diélectriques en nitrures du type Si3N4. II semble que la durabilité est encore meilleure si on choisit d'ajouter Sb plutôt que Al dans l'oxyde mixte.

L'invention s'applique aussi bien à des substrats porteurs en verre qu'en matériau transparent de type polymère organique comme rappelé dans le préambule.

Les couches de l'invention peuvent être utilisées comme surcouche fine de protection ou couche fine « bloquante » (ce terme désigne le fait que la couche en question protège la couche métallique fonctionnelle, par exemple en Ag, de la détérioration due au dépôt de la couche supérieure en oxyde déposée par pulvérisation réactive en présence d'oxygène), par exemple dans des gammes d'épaisseur allant de 2 à 6 nm, ou dans des gammes d'épaisseur plus significatives pour servir de couche de diélectrique ayant un rôle optique significatif (par exemple dans une gamme d'épaisseur de 7 à 50 nm.

Elles peuvent être incorporées dans beaucoup d'empilement de couches minces, par exemple dans des empilements à couche fonctionnelle anti-solaire ou bas-émissif comme des couches d'argent. L'empilement peut contenir une ou plusieurs couches d'Ag comme cela est décrit dans les brevets EP 638 528, EP 718 250, EP 844 219, EP 847 965, FR 98/13249 et FR98/13250. L'empilement peut contenir un autre type de couche fonctionnelle, par exemple en métal comme un alliage Ni-Cr , ou de l'acier comme cela est décrit dans le brevet EP 511 901 ou en nitrure comme le TiN ou le ZrN.

La couche en diélectrique selon l'invention peut aussi faire partie d'un empilement antireflets, comme cela est décrit dans le brevet EP 728 712 ou WO 97/43224, ou de tout autre empilement de couches à fonction optique, thermique, électrique utilisant des couches d'oxyde/ de diélectrique ayant des indices de réfraction autour de 2.

Les substrats porteurs de l'empilement peuvent servir à faire des vitrages monolithiques (unique substrat rigide), feuilletés ou multiples à fonction d'isolation thermique et/ou acoustique du type double-vitrage. On peut les utiliser dans le bâtiment, pour équiper des véhicules (pare-brise), pour des écrans de visualisation...

A titre d'illustration, ci-après des empilements pouvant incorporer les couches de l'invention :
- substrat transparent/SnO₂/ZnO/Ag/couche bloquante type NiCr optionnelle/SnO₂/ZnSnO:Al ou Sb selon l'invention,
- substrat transparent/SnO₂/ZnO/Ag/ couche bloquante type NiCr ou Ti optionnelle/SnO₂/SiO₂/SnO₂/ZnSnO :Al ou Sb selon l'invention.

Les séquences peuvent contenir deux couches d'Ag aussi.

A noter en outre que les taux en métal ajouté par rapport à Sn et Zn dans la cible sont à peu près les mêmes dans la couche obtenue à partir de la cible en question.

Les empilements peuvent bien sûr contenir plusieurs couches selon l'invention, notamment une pour sa fonction de couche bloquante et une pour sa fonction de surcouche protectrice.

## Revendications

1. Empilement de couches pour substrats transparents, en particulier pour des substrats en verre, avec au moins une couche composite d'oxydes métalliques contenant un oxyde mixte de zinc et d'étain, notamment produite par pulvérisation cathodique réactive à partir d'une cible d'alliage métallique contenant Zn et Sn, **caractérisé en ce que** la couche composite d'oxydes métalliques contient un ou plusieurs des éléments Al, Ga, In, B, Y, La, Ge, Si, P, As, Sb, Bi, Ce, Ti, Zr, Nb et Ta, la quantité des éléments Al, Ga, In, B, Y, La, Ge, Si, P, As, Sb, Bi, Ce, Ti, Zr, Nb et/ou Ta dans la couche composite d'oxydes métalliques par rapport à la quantité totale de métal étant de 0,5 à 6,5% en poids et **en ce que** la couche composite d'oxydes métalliques a une épaisseur de 2 à 6 nm ou 7 à 50 nm sauf **en ce que** un verre flotté d'une épaisseur de 6 mm est muni du système de couches suivant :
Verre - 25 nm de SnO₂ - 8 nm de ZnO - 4 nm de Zn - 13,5 nm d'Ag - 3 nm de AlZnMg - 40 nm de SnO₂ - 4 nm de ZnₓSn_{y}Al_{z}Oₙ :
* la cible qui est pulvérisée pour faire la couche sacrificielle en AlZnMg étant à base d'un alliage comprenant 94% en poids d'Al, 6% en poids de Zn et 1% en poids de Mg ; la couche obtenue a une composition très proche de celle de la cible, et
* pour faire la couche mixte d'oxyde de zinc, on utilise une cible comprenant 68% de Zn, 30% de Sn et 2% d'Al en poids.

2. Empilement de couches selon la revendication 1, **caractérisé en ce que** la couche composite d'oxydes métalliques contient l'élément Al.

3. Empilement de couches selon la revendication 1, **caractérisé en ce que** la couche composite d'oxydes métalliques contient l'élément Sb.

4. Empilement de couches selon l'une quelconque des revendications 1 à 3, **caractérisé en ce que** la couche composite d'oxydes métalliques contient de 35 à 70% en poids de Zn et de 29 à 64,5% en poids de Sn, dans chaque cas par rapport à la quantité totale de métal.

5. Empilement de couches selon la revendication 4, **caractérisé en ce que** la couche composite d'oxydes métalliques contient de 66 à 69% en poids de Zn, de 29 à 32% de Sn et de 1 à 4% en poids de Al ou Sb.

6. Empilement de couche selon l'une quelconque des revendications 1 à 5, **caractérisé en ce que** la couche composite d'oxydes métalliques a une épaisseur de 2 à 6 nm.

7. Empilement de couche selon l'une quelconque des revendications 1 à 6, **caractérisé en ce que** la couche composite d'oxydes métalliques est la couche anti-réflexion inférieure et/ou supérieure d'un empilement de couches ayant une ou plusieurs couches fonctionnelles faites d'un métal tel que l'argent.

8. Empilement de couches selon l'une quelconque des revendications 1 à 6, **caractérisé en ce que** la couche composite d'oxydes métalliques est une couche de barrière à diffusion dans un empilement multicouches.

9. Empilement de couches selon l'une quelconque des revendications 1 à 6, **caractérisé en ce que** la couche composite d'oxydes métalliques est une sous-couche de la couche anti-réflexion supérieure et/ou inférieure.

10. Empilement de couches selon la revendication 9, **caractérisé par** la séquence de couches substrat- SnO₂ - Me - Ag - Me - SnO₂ - ZnₓSn_{y}Al_{z}Oₙ, Me étant un métal bloqueur ou un alliage métallique bloqueur, comme par exemple Ti, Ta, Zr ou CrNi.

11. Empilement de couches selon la revendication 9, **caractérisé par** la séquence de couches substrat- SnO₂ - Me - Ag - Me - ZnₓSn_{y}Al_{z}Oₙ - SnO₂, Me étant un métal bloqueur ou un alliage métallique bloqueur, comme par exemple Ti, Ta, Zr ou CrNi.

12. Empilement de couches selon l'une quelconque des revendications 1 à 8 **caractérisé en ce que** la séquence de couches est la suivante :
SnO₂/ZnO/Ag/couche bloquante éventuelle/SnO₂/ZnSnO:Al ou Sb ou
SnO₂/ZnO/Ag/couche bloquante éventuelle/SnO₂/SiO₂/SnO₂/SnZnO:Al ou Sb

13. Empilement de couches selon l'une quelconque des revendications 1 à 8 **caractérisé en ce qu'**il comprend au moins une couche fonctionnelle en métal du type Ag, NiCr, acier ou en nitrure du type ZrN ou TiN.

14. Empilement selon l'une des revendications 1 à 8 **caractérisé en ce qu'**il a une fonction anti-solaire, bas-émissif, anti-reflet, électrique.

15. Empilement selon l'une des revendications précédentes, **caractérisé en ce que** la couche composite d'oxydes métalliques présente une structure de spinelle.

16. Substrat transparent en verre ou en matériau polymère organique souple ou rigide revêtu sur au moins une de ses faces d'un empilement de couches selon l'une des revendications précédentes.

17. Vitrage monolithique, feuilleté ou multiple incorporant le substrat selon la revendication 16.

18. Procédé de fabrication de l'empilement selon l'une des revendications 1 à 15 **caractérisé en ce qu'**on dépose la couche composite d'oxydes métalliques par pulvérisation cathodique à partir d'un cible métallique contenant Zn, Sn et un ou plusieurs des éléments suivants : Al, Ga, In, B, Y, La, Ge, Si, P, As, Sb, Bi, Ce, Ti, Zr, Nb,Ta.

19. Utilisation d'un substrat porteur d'un empilement de couches pour un écran de visualisation, en particulier pour des substrats en verre, avec au moins une couche composite d'oxydes métalliques contenant un oxyde mixte de zinc et d'étain, notamment produite par pulvérisation cathodique réactive à partir d'une cible d'alliage métallique contenant Zn et Sn, **caractérisée en ce que** la couche composite d'oxydes métalliques contient un ou plusieurs des éléments Al, Ga, In, B, Y, La, Ge, Si, P, As, Sb, Bi, Ce, Ti, Zr, Nb et Ta, la quantité des éléments Al, Ga, In, B, Y, La, Ge, Si, P, As, Sb, Bi, Ce, Ti, Zr, Nb et/ou Ta dans la couche composite d'oxydes métalliques par rapport à la quantité totale de métal étant de 0,5 à 6,5% en poids et **en ce que** la couche composite d'oxydes métalliques a une épaisseur de 2 à 6 nm ou 7 à 50 nm.

20. Utilisation selon la revendication 19, **caractérisée en ce que** la couche composite d'oxydes métalliques contient l'élément Al ou la couche composite d'oxydes métalliques contient l'élément Sb.

21. Utilisation selon l'une des revendications 19 ou 20, **caractérisée en ce que** la couche composite d'oxydes métalliques contient de 35 à 70% en poids de Zn et de 29 à 64,5% en poids de Sn, dans chaque cas par rapport à la quantité totale de métal, et de préférence la couche composite d'oxydes métalliques contient de 66 à 69% en poids de Zn, de 29 à 32% de Sn et de 1 à 4% en poids de Al ou Sb.

22. Utilisation selon l'une quelconque des revendications 19 à 21, **caractérisée en ce que** la couche composite d'oxydes métalliques est une sous-couche de la couche anti-réflexion supérieure et/ou inférieure.

23. Utilisation selon l'une quelconque des revendications 19 à 22 **caractérisée en ce que** la séquence de couches est la suivante :
SnO₂/ZnO/Ag/couche bloquante éventuelle/SnO₂/ZnSnO:Al ou Sb ou
SnO₂/ZnO/Ag/couche bloquante éventuelle/SnO₂/SiO₂/SnO₂/SnZnO:Al ou Sb

24. Utilisation selon l'une quelconque des revendications 19 à 23 **caractérisée en ce que** l'empilement comprend au moins une couche fonctionnelle en métal du type Ag, NiCr, acier ou en nitrure du type ZrN ou TiN.

25. Utilisation l'une des revendications 19 à 24, **caractérisée en ce que** la couche composite d'oxydes métalliques présente une structure de spinelle.

26. Ecran de visualisation utilisant un substrat porteur d'un empilement de couches, en particulier pour des substrats en verre, avec au moins une couche composite d'oxydes métalliques contenant un oxyde mixte de zinc et d'étain, notamment produite par pulvérisation cathodique réactive à partir d'une cible d'alliage métallique contenant Zn et Sn, **caractérisé en ce que** la couche composite d'oxydes métalliques contient un ou plusieurs des éléments Al, Ga, In, B, Y, La, Ge, Si, P, As, Sb, Bi, Ce, Ti, Zr, Nb et Ta, la quantité des éléments Al, Ga, In, B, Y, La, Ge, Si, P, As, Sb, Bi, Ce, Ti, Zr, Nb et/ou Ta dans la couche composite d'oxydes métalliques par rapport à la quantité totale de métal étant de 0,5 à 6,5% en poids et **en ce que** la couche composite d'oxydes métalliques a une épaisseur de 2 à 6 nm ou 7 à 50 nm.

27. Ecran de visualisation selon la revendication 26, **caractérisé en ce que** la couche composite d'oxydes métalliques contient l'élément Al ou la couche composite d'oxydes métalliques contient l'élément Sb.

28. Ecran de visualisation selon l'une des revendications 26 ou 27, **caractérisé en ce que** la couche composite d'oxydes métalliques contient de 35 à 70% en poids de Zn et de 29 à 64,5% en poids de Sn, dans chaque cas par rapport à la quantité totale de métal, et de préférence la couche composite d'oxydes métalliques contient de 66 à 69% en poids de Zn, de 29 à 32% de Sn et de 1 à 4% en poids de Al ou Sb.

29. Ecran de visualisation selon l'une quelconque des revendications 26 à 28, **caractérisé en ce que** la couche composite d'oxydes métalliques est une sous-couche de la couche anti-réflexion supérieure et/ou inférieure.

30. Ecran de visualisation selon l'une quelconque des revendications 26 à 29 **caractérisé en ce que** la séquence de couches est la suivante :
SnO₂/ZnO/Ag/couche bloquante éventuelle/SnO₂/ZnSnO:Al ou Sb ou
SnO₂/ZnO/Ag/couche bloquante éventuelle/SnO₂/SiO₂/SnO₂/SnZnO:Al ou Sb

31. Ecran de visualisation selon l'une quelconque des revendications 26 à 30 **caractérisé en ce que** l'empilement comprend au moins une couche fonctionnelle en métal du type Ag, NiCr, acier ou en nitrure du type ZrN ou TiN.

32. Ecran de visualisation l'une des revendications 26 à 31, **caractérisé en ce que** la couche composite d'oxydes métalliques présente une structure de spinelle.

## Claims

1. Layer stack for transparent substrates, in particular for panes of glass, with at least one metal oxide composite layer produced by reactive cathodic sputtering from a metallic alloy target containing Zn and Sn, **characterized in that** the metal oxide composite layer contains one or more of the elements Al, Ga, In, B, Y, La, Ge, Si, P, As, Sb, Bi, Ce, Ti, Zr, Nb and Ta, amount of the elements Al, Ga, In, B, Y, La, Ge, Si, P, As, Sb, Bi, Ce, Ti, Zr, Nb and/or Ta in the metal oxide composite layer relative to the total amount of metal being from 0.5 to 6.5% by weight **and in that** the metal oxide composite layer has a thickness of 2 to 6 nm or of 7 to 50 nm, **except in that** a float glass of a thickness of 6 mm is provided with the following system of layers:
Glass - 25 nm of SnO₂ - 8 nm of ZnO - 4 nm of Zn - 13.5 nm of Ag - 3 nm of AlZnMg - 40 nm of SnO₂ - 4 nm of ZnₓSn_{y}Al_{z}Oₙ:
* the target which is sputtered to make the sacrificial layer in AlZnMg being from an alloy including 94% of Al in weight, 6% of Zn in weight and 1% of Mg in weight; the obtained layer has a composition very close to that of the target, and
* to make the mixed layer of zinc oxide, one uses a target including 68% of Zn, 30% of Sn and 2% of Al in weight.

2. Layer stack according to Claim 1, **characterized in that** the metal oxide composite layer contains the element Al.

3. Layer stack according to Claim 1, **characterized in that** the metal oxide composite layer contains the element Sl.

4. Layer stack according to one of Claim 1 to 3, **characterized in that** the metal oxide composite layer contains from 35 to 70% by weight Zn and from 29 to 64.5% by weight Sn, in each case relative to the total amount of metal.

5. Layer stack according to Claim 4, **characterized in that** the metal oxide composite layer contains from 66 to 69% by weight Zn, from 29 to 32% Sn and from 1 to 4% by weight Al or Sb.

6. Layer stack according to Claim 1, **characterized in that** the metal oxide composite layer has a thickness of 2 to 6 nm.

7. Layer stack according to one of Claims 1 to 6, **characterized in that** the metal oxide composite layer is the lower and/or the upper antireflection layer of a layer stack having one or more functional layers made of a metal such as silver.

8. Layer stack according to one of Claims 1 to 6, **characterized in that** the metal oxide composite layer is a diffusion barrier layer in a multilayer stack.

9. Layer stack according to one of Claims 1 to 6, **characterized in that** the metal oxide composite layer is a sublayer of the upper and/or the lower antireflection layer.

10. Layer stack according to Claim 9, **characterized by** the layer sequence: substrate - SnO₂ -Me - Ag - Me - SnO₂ - ZnₓSn_{y}Al_{z}Oₙ, Me being a blocker metal or a blocker metal alloy, for example Ti, Ta, Zr or CrNi.

11. Layer stack according to Claim 9, **characterized by** the layer sequence: substrate - SnO₂ - Me - Ag - Me - ZnₓSn_{y}Al_{z}Oₙ - SnO₂, Me being a blocker metal or a blocker metal alloy, for example Ti, Ta, Zr or CrNi.

12. Layer stack according to one of the claims 1 to 8, **characterized in the fact that** the layer sequence is the following:
SnO₂/ZnO/Ag/optional blocker layer/SnO₂/ZnSnO:Al or Sb
or the following sequence:
SnO₂/ZnO/Ag/optional blocker layer/SnO₂/SiO₂/SnO₂/SnZnO:Al ou Sb.

13. Layer stack according to one of the claims 1 to 8 **characterized in that** it contains at least a functional layer in metal like Ag, NiCr, steel, or in nitride like TiN or ZrN.

14. Layer stack according to one of claims 1 to 8 **characterized in that** it has an anti-solar, low emissivity, anti reflecting or electrical function.

15. Layer stack according to one of the preceding claims **characterized in that** the composite layer has a spinel structure.

16. Transparent substrate in glass or polymeric material, rigid or flexible, coated on at least one of its faces by a stack of layers according to one of the preceding claims.

17. Monolithic, laminated or multiple glazing incorporating the substrate according to claim 16.

18. Process for producing the stack of layers according to one of claims 1 to 15 **characterized in that** the composite layer is deposited by reactive sputtering from a metallic target which contains Zn, Sn and at least one of the following element: Al, Ga, In, B, La, Ge, Si, P, As, Bi, Ce, Ti, Zr, Nb, Ta.

19. Use of a substrate provided with a stack of layers for a display panel, in particular for panes of glass, with at least one metal oxide composite layer produced by reactive cathodic sputtering from a metallic alloy target containing Zn and Sn, **characterized in that** the metal oxide composite layer contains one or more of the elements Al, Ga, In, B, Y, La, Ge, Si, P, As, Sb, Bi, Ce, Ti, Zr, Nb and Ta, amount of the elements Al, Ga, In, B, Y, La, Ge, Si, P, As, Sb, Bi, Ce, Ti, Zr, Nb and/or Ta in the metal oxide composite layer relative to the total amount of metal being from 0.5 to 6.5% by weight **and in that** the metal oxide composite layer has a thickness of 2 to 6 nm or of 7 to 50 nm.

20. Use according to Claim 19, **characterized in that** the metal oxide composite layer contains the element Al or the metal oxide composite layer contains the element Sb.

21. Use according to Claim 19 or 20, **characterized in that** the metal oxide composite layer contains from 35 to 70% by weight Zn and from 29 to 64.5% by weight Sn, in each case relative to the total amount of metal and preferably the metal oxide composite layer contains from 66 to 69% by weight Zn, from 29 to 32% Sn and from 1 to 4% by weight Al or Sb.

22. Use according to one of the Claims 19 to 21, **characterized in that** the metal oxide composite layer is a sublayer of the upper and/or the lower antireflection layer.

23. Use according to one of the claims 19 to 22, **characterized in the fact that** the layer sequence is the following:
SnO₂/ZnO/Ag/optional blocker layer/SnO₂/ZnSnO:Al or Sb
or the following sequence:
SnO₂/ZnO/Ag/optional blocker layer/SnO₂/SiO₂/SnO₂/ZnSnO:Al or Sb.

24. Use according to one of the claims 19 to 23 **characterized in that** it contains at least a functional layer in metal like Ag, NiCr, steel, or in nitride like TiN or ZrN.

25. Use according to one of the claims 19 to 24 **characterized in that** the composite layer has a spinel structure.

26. Display panel using a substrate provided with a stack of layers, in particular for panes of glass, with at least one metal oxide composite layer produced by reactive cathodic sputtering from a metallic alloy target containing Zn and Sn, **characterized in that** the metal oxide composite layer contains one or more of the elements Al, Ga, In, B, Y, La, Ge, Si, P, As, Sb, Bi, Ce, Ti, Zr, Nb and Ta, amount of the elements Al, Ga, In, B, Y, La, Ge, Si, P, As, Sb, Bi, Ce, Ti, Zr, Nb and/or Ta in the metal oxide composite layer relative to the total amount of metal being from 0.5 to 6.5% by weight **and in that** the metal oxide composite layer has a thickness of 2 to 6 nm or of 7 to 50 nm.

27. Display panel according to Claim 26, **characterized in that** the metal oxide composite layer contains the element Al or the metal oxide composite layer contains the element Sb.

28. Display panel according to Claim 26 or 27, **characterized in that** the metal oxide composite layer contains from 35 to 70% by weight Zn and from 29 to 64.5% by weight Sn, in each case relative to the total amount of metal and preferably the metal oxide composite layer contains from 66 to 69% by weight Zn, from 29 to 32% Sn and from 1 to 4% by weight Al or Sb.

29. Display panel according to one of the Claims 26 to 28, **characterized in that** the metal oxide composite layer is a sublayer of the upper and/or the lower antireflection layer.

30. Display panel according to one of the claims 26 to 29, **characterized in the fact that** the layer sequence is the following:
SnO₂/ZnO/Ag/optional blocker layer/SnO₂/ZnSnO:Al or Sb
or the following sequence:
SnO₂/ZnO/Ag/optional blocker layer/SnO₂/SiO₂/SnO₂/ZnSnO:Al or Sb.

31. Display panel according to one of the claims 26 to 30 **characterized in that** it contains at least a functional layer in metal like Ag, NiCr, steel, or in nitride like TiN or ZrN.

32. Display panel according to one of the claims 26 to 31 **characterized in that** the composite layer has a spinel structure.

## Patentansprüche

1. Schichtaufbau für transparente Substrate, insbesondere für Substrate aus Glas, mit mindestens einer Metalloxid-Verbundschicht, die ein Zink-Zinn-Mischoxid enthält und insbesondere durch reaktive Kathodenzerstäubung ausgehend von einem Target aus einer Zn und Sn enthaltenden Metalllegierung erzeugt worden ist, **dadurch gekennzeichnet, dass** die Metalloxid-Verbundschicht eines oder mehrere der Elemente Al, Ga, In, B, Y, La, Ge, Si, P, As, Sb, Bi, Ce, Ti, Zr, Nb und Ta enthält, wobei die Menge der Elemente Al, Ga, In, B, Y, La, Ge, Si, P, As, Sb, Bi, Ce, Ti, Zr, Nb und/oder Ta in der Metalloxid-Verbundschicht, bezogen auf die gesamte Metallmenge, 0,5 bis 6,5 Gew.-% beträgt, **und dass** die Dicke der Metalloxid-Verbundschicht 2 bis 6 nm oder 7 bis 50 nm beträgt, **ausgenommen**, wenn ein 6 mm dickes Floatglas mit folgendem Schichtsystem versehen wird:
Glas-25 nm SnO₂-8 nm ZnO-4 nm Zn-13,5 nm Ag-3 nm AlZnMg-40 nm SnO₂-4 nm ZnₓSn_{y}Al_{z}Oₙ und:
* das Target, das zerstäubt wird, um die AlZnMg-Getterschicht zu erzeugen, auf der Basis einer Legierung ist, die 94 Gew.-% al, 6 Gew.-% Zn und 1 Gew.-% Mg enthält, wobei die Zusammensetzung der erhaltenen Schicht derjenigen des Targets sehr nahe ist, und
* zur Erzeugung der Zinkmischoxidschicht ein Target verwendet wird, das 68 Gew.-% Zn, 30 Gew.-% Sn und 2 Gew.-% Al enthält.

2. Schichtaufbau nach Anspruch 1, **dadurch gekennzeichnet, dass** die Metalloxid-Verbundschicht das Element Al enthält.

3. Schichtaufbau nach Anspruch 1, **dadurch gekennzeichnet, dass** die Metalloxid-Verbundschicht das Element Sb enthält.

4. Schichtaufbau nach einem der Ansprüche 1 bis 3, **dadurch gekennzeichnet, dass** die Metalloxid-Verbundschicht 35 bis 70 Gew.-% Zn und 29 bis 64,5 Gew.-% Sn, in jedem Fall bezogen auf die gesamte Metallmenge, enthält.

5. Schichtaufbau nach Anspruch 4, **dadurch gekennzeichnet, dass** die Metalloxid-Verbundschicht 66 bis 69 Gew.-% Zn, 29 bis 32 Gew.-% Sn und 1 bis 4 Gew.-% Al oder Sb enthält.

6. Schichtaufbau nach einem der Ansprüche 1 bis 5, **dadurch gekennzeichnet, dass** die Dicke der Metalloxid-Verbundschicht 2 bis 6 nm beträgt.

7. Schichtaufbau nach einem der Ansprüche 1 bis 6, **dadurch gekennzeichnet, dass** die Metalloxid-Verbundschicht die untere und/oder obere Antireflexschicht eines Schichtaufbaus mit einer oder mehreren aus einem Metall wie Silber erzeugten Funktionsschichten ist.

8. Schichtaufbau nach einem der Ansprüche 1 bis 6, **dadurch gekennzeichnet, dass** die Metalloxid-Verbundschicht eine Barriereschicht gegen die Diffusion in einem Mehrschichtaufbau ist.

9. Schichtaufbau nach einem der Ansprüche 1 bis 6, **dadurch gekennzeichnet, dass** die Metalloxid-Verbundschicht eine Unterschicht der oberen und/oder unteren Antireflexschicht ist.

10. Schichtaufbau nach Anspruch 9, **gekennzeichnet durch** die Schichtabfolge Substrat-SnO₂-Me-Ag-Me-SnO₂-ZnₓSn_{y}Al_{z}Oₙ, wobei Me ein blockierendes Metall oder eine blockierende Metalllegierung, beispielsweise Ti, Ta, Zr oder CrNi, ist.

11. Schichtaufbau nach Anspruch 9, **gekennzeichnet durch** die Schichtabfolge Substrat-SnO₂-Me-Ag-Me-ZnₓSn_{y}Al_{z}Oₙ-SnO₂, wobei Me ein blockierendes Metall oder eine blockierende Metalllegierung, beispielsweise Ti, Ta, Zr oder CrNi, ist.

12. Schichtaufbau nach einem der Ansprüche 1 bis 8, **dadurch gekennzeichnet, dass** die Schichtabfolge folgende ist:
SnO₂/ZnO/Ag/mögliche Blockierschicht/SnO₂/ZnSnO:Al oder Sb oder
SnO₂/ZnO/Ag/mögliche Blockierschicht/SnO₂/SiO₂/SnO₂/SnZnO:Al oder Sb.

13. Schichtaufbau nach einem der Ansprüche 1 bis 8, **dadurch gekennzeichnet, dass** er mindestens eine Funktionsschicht aus einem Metall vom Typ Ag, NiCr und Stahl oder aus einem Nitrid vom Typ ZrN oder TiN umfasst.

14. Aufbau nach einem der Ansprüche 1 bis 8, **dadurch gekennzeichnet, dass** er eine vor Sonne schützende, niedrig emittierende, antireflektierende und elektrische Funktion hat.

15. Schichtaufbau nach einem der vorhergehenden Ansprüche, **dadurch gekennzeichnet, dass** die Metalloxid-Verbundschicht eine Spinellstruktur aufweist.

16. Transparentes Substrat aus Glas oder einem starren oder flexiblen organischen Polymermaterial, das auf wenigstens einer Seite mit einem Schichtaufbau nach einem der vorhergehenden Ansprüche beschichtet ist.

17. Monolithische, Verbund- oder Mehrfachverglasung, die das Substrat nach Anspruch 16 umfasst.

18. Verfahren zur Herstellung des Aufbaus nach einem der Ansprüche 1 bis 15, **dadurch gekennzeichnet, dass** die Metalloxid-Verbundschicht durch Kathodenzerstäubung ausgehend von einem Metalltarget aufgebracht wird, das Zn, Sn und eines oder mehrere der folgenden Elemente enthält: Al, Ga, In, B, Y, La, Ge, Si, P, As, Sb, Bi, Ce, Ti, Zr, Nb, Ti.

19. Verwendung eines Trägersubstrat mit einem Aufbau für einem Bildschirm, insbesondere für Substrate aus Glas, mit mindestens einer Metalloxid-Verbundschicht, die ein Zink-Zinn-Mischoxid enthält und insbesondere durch reaktive Kathodenzerstäubung ausgehend von einem Target aus einer Zn und Sn enthaltenden Metalllegierung erzeugt worden ist, **dadurch gekennzeichnet, dass** die Metalloxid-Verbundschicht eines oder mehrere der Elemente Al, Ga, In, B, Y, La, Ge, Si, P, As, Sb, Bi, Ce, Ti, Zr, Nb und Ta enthält, wobei die Menge der Elemente Al, Ga, In, B, Y, La, Ge, Si, P, As, Sb, Bi, Ce, Ti, Zr, Nb und/oder Ta in der Metalloxid-Verbundschicht, bezogen auf die gesamte Metallmenge, 0,5 bis 6,5 Gew.-% beträgt.

20. Verwendung nach Anspruch 19, **dadurch gekennzeichnet, dass** die Metalloxid-Verbundschicht das Element Al, oder die Metalloxid-Verbundschicht das Element Sb, enthält.

21. Verwendung nach einem der Ansprüche 19 oder 20, **dadurch gekennzeichnet, dass** die Metalloxid-Verbundschicht 35 bis 70 Gew.-% Zn und 29 bis 64,5 Gew.-% Sn, in jedem Fall bezogen auf die gesamte Metallmenge, und vorzugsweise die Metalloxid-Verbundschicht 66 bis 69 Gew.-% Zn, 29 bis 32 Gew.-% Sn und 1 bis 4 Gew.-% Al oder Sb, enthält.

22. Verwendung nach einem der Ansprüche 19 bis 21, **dadurch gekennzeichnet, dass** die Metalloxid-Verbundschicht eine Unterschicht der oberen und/oder unteren Antireflexschicht ist.

23. Verwendung nach einem der Ansprüche 19 bis 22, **dadurch gekennzeichnet, dass** die Schichtabfolge folgende ist:
SnO₂/ZnO/Ag/mögliche Blockierschicht/SnO₂/ZnSnO:Al oder Sb oder
SnO₂/ZnO/Ag/mögliche Blockierschicht/SnO₂/SiO₂/SnO₂/SnZnO:Al oder Sb.

24. Verwendung nach einem der Ansprüche 19 bis 23, **dadurch gekennzeichnet, dass** er mindestens eine Funktionsschicht aus einem Metall vom Typ Ag, NiCr und Stahl oder aus einem Nitrid vom Typ ZrN oder TiN umfasst.

25. Verwendung nach einem der Ansprüche 19 bis 24, **dadurch gekennzeichnet, dass** die Metalloxid-Verbundschicht eine Spinellstruktur aufweist.

26. Bildschirm, für welchen ein Träger substrat mit einem Aufbau, insbesondere für Substrate aus Glas, mit mindestens einer Metalloxid-Verbundschicht, die ein Zink-Zinn-Mischoxid enthält und insbesondere durch reaktive Kathodenzerstäubung ausgehend von einem Target aus einer Zn und Sn enthaltenden Metalllegierung erzeugt worden ist, **dadurch gekennzeichnet, dass** die Metalloxid-Verbundschicht eines oder mehrere der Elemente Al, Ga, In, B, Y, La, Ge, Si, P, As, Sb, Bi, Ce, Ti, Zr, Nb und Ta enthält, wobei die Menge der Elemente Al, Ga, In, B, Y, La, Ge, Si, P, As, Sb, Bi, Ce, Ti, Zr, Nb und/oder Ta in der Metalloxid-Verbundschicht, bezogen auf die gesamte Metallmenge, 0,5 bis 6,5 Gew.-% beträgt verwendet worden ist.

27. Bildschirm nach Anspruch 26, **dadurch gekennzeichnet, dass** die Metalloxid-Verbundschicht das Element Al, oder die Metalloxid-Verbundschicht das Element Sb, enthält.

28. Bildschirm nach einem der Ansprüche 26 oder 27, **dadurch gekennzeichnet, dass** die Metalloxid-Verbundschicht 35 bis 70 Gew.-% Zn und 29 bis 64,5 Gew.-% Sn, in jedem Fall bezogen auf die gesamte Metallmenge und vorzugweise die Metalloxid-Verbundschicht 66 bis 69 Gew.-% Zn, 29 bis 32 Gew.-% Sn und 1 bis 4 Gew.-% Al oder Sb, enthält.

29. Bildschirm nach einem der Ansprüche 26 bis 28, **dadurch gekennzeichnet, dass** die Metalloxid-Verbundschicht eine Unterschicht der oberen und/oder unteren Antireflexschicht ist.

30. Bildschirm nach einem der Ansprüche 26 bis 29, **dadurch gekennzeichnet, dass** die Schichtabfolge folgende ist:
SnO₂/ZnO/Ag/mögliche Blockierschicht/SnO₂/ZnSnO:Al oder Sb oder
SnO₂/ZnO/Ag/mögliche Blockierschicht/SnO₂/SiO₂/SnO₂/SnZnO:Al oder Sb.

31. Bildschirm nach einem der Ansprüche 26 bis 30, **dadurch gekennzeichnet, dass** er mindestens eine Funktionsschicht aus einem Metall vom Typ Ag, NiCr und Stahl oder aus einem Nitrid vom Typ ZrN oder TiN umfasst.

32. Bildschirm nach einem der Ansprüche 26 bis 31, **dadurch gekennzeichnet, dass** die Metalloxid-Verbundschicht eine Spinellstruktur aufweist.
